# FASCICULE DE BREVET EUROPEEN

(11) **EP 4 085 299 B1**
(45) Date de publication et mention de la délivrance du brevet: **08.11.2023**
(21) Numéro de dépôt: 20851235.0
(22) Date de dépôt: 28.12.2020
(51) Int. Cl.: G02F 1/153, B32B 17/10, B32B 17/06

(54) **SYSTÈME OPTIQUE, VITRAGE ISOLANT COMPORTANT UN TEL SYSTÈME OPTIQUE, PROCÉDÉ DE FABRICATION DE CE VITRAGE ISOLANT ET PROCÉDÉ DE PROTECTION D'UN SYSTÈME OPTIQUE**
OPTISCHES SYSTEM, ISOLIERVERGLASUNG, DIE EIN SOLCHES OPTISCHES SYSTEM UMFASST, VERFAHREN ZUM HERSTELLEN DIESER ISOLIERVERGLASUNG UND VERFAHREN ZUM SCHÜTZEN EINES OPTISCHEN SYSTEMS
OPTICAL SYSTEM, INSULATING GLAZING COMPRISING SUCH AN OPTICAL SYSTEM, PROCESS FOR MANUFACTURING THIS INSULATING GLAZING AND PROCESS FOR PROTECTING AN OPTICAL SYSTEM

(30) Priorité: 02.01.2020 FR 2000008
(43) Date de publication de la demande: 09.11.2022
(73) Titulaire: Saint-Gobain Glass France, 92400 Courbevoie (FR)
(72) Inventeur: CHEVALLIER, Théo, 75019 PARIS (FR); MERCADIER, Nicolas, MINNEAPOLIS, Minnesota 55410 (US)
(74) Mandataire: Saint-Gobain Recherche
(86) Numéro de dépôt international: PCT/FR2020/052635
(87) Numéro de publication internationale: WO 2021/136914

(56) Documents cités:
- EP-B1- 2 724 194
- US-A- 5 699 192
- US-A- 6 115 171

## Description

La présente invention concerne un système optique, un vitrage isolant comportant un tel système optique, un procédé de fabrication de ce vitrage isolant et un procédé de protection d'un système optique associé.

Les dispositifs électrochromes sont des dispositifs électrochimiques à propriétés optiques et/ou énergétiques électrocommandables. Ces dispositifs présentent certaines caractéristiques pouvant être modifiées sous l'effet d'une alimentation électrique appropriée pour modifier l'état du dispositif électrochrome entre un état clair et un état teint. Lesdites caractéristiques modifiables sont en particulier les suivantes : la transmission, l'absorption, la réflexion dans certaines longueurs d'ondes du rayonnement électromagnétique, notamment dans le visible et/ou dans l'infrarouge, ou encore la diffusion lumineuse. La variation de transmission intervient généralement dans le domaine optique (infrarouge, visible, ultraviolet) et/ou dans d'autres domaines du rayonnement électromagnétique, d'où la dénomination de dispositif à propriétés optiques et/ou énergétiques variables, le domaine optique n'étant pas nécessairement le seul domaine concerné.

En effet, ces dispositifs utilisés comme vitrages permettent sur le plan thermique/énergétique de contrôler l'apport solaire à l'intérieur des pièces ou habitacles/compartiments quand ils sont montés en vitrages extérieurs de bâtiment ou fenêtres de moyens de transport du type voiture, train, avion, et d'éviter un échauffement excessif de ceux-ci en cas de fort ensoleillement.

Sur le plan optique, ils permettent un contrôle du degré de vision, ce qui permet d'éviter l'éblouissement quand ils sont montés en vitrages extérieurs en cas de fort ensoleillement. Ils peuvent aussi avoir un effet de volet particulièrement intéressant, aussi bien en tant que vitrages extérieurs qu'en vitrages intérieurs, par exemple pour équiper des cloisons intérieures entre des pièces (bureaux dans un bâtiment), ou pour isoler des compartiments dans des trains ou des avions par exemple.

Le processus de fabrication des dispositifs électrochromes nécessite la préparation de substrats verriers, par exemple en verre, revêtus d'un côté d'un empilement de plusieurs couches minces d'épaisseur et de nature différentes nommé dans la présente demande « empilement électrochrome ». La préparation de tels substrats en vue de la fabrication de dispositifs électrochromes et par conséquent de vitrage isolant implique souvent diverses opérations de transformation, de traitement, de manipulation, de découpe, de transport, de lavage et/ou de stockage. Il est en effet courant et pratique de réaliser l'assemblage et/ou traitement divers sur un lieu autre que celui où sont fabriqués les substrats portant l'empilement électrochrome. Ces différentes opérations peuvent ainsi provoquer des altérations/des défauts de types rayures et toute autre contamination. Certaines de ces opérations peuvent également causer des court-circuits au sein de l'empilement électrochrome causant une absence de teinte locale très visible pour un observateur. Une contamination ou un dommage réduit la viabilité et l'efficacité de l'empilement électrochrome, autrement dit provoque une diminution des propriétés optiques et énergétiques/thermiques conférés par ledit empilement aux substrats.

En effet, de manière générale un empilement électrochrorne comprend une première couche conductrice transparente, une couche de matériau électrochrome, une couche d'un électrolyte conducteur ionique, une couche de contre-électrode et une deuxième couche conductrice transparente. Les substrats en verre revêtus d'un tel empilement électrochrome sont très sensibles :
- aux dommages mécaniques, puisqu'une rayure légère peut causer un court-circuit entre les deux couches conductrices transparentes, ce qui peut alors empêcher la coloration du vitrage, et
- aux dommages chimiques, comme l'humidité, puisque l'électrolyte contenant des ions lithium peut réagir avec de l'eau, ce qui peut alors entraîner une dégradation des performances du vitrage final et notamment une dégradation de l'uniformité et donc de l'aspect esthétique du vitrage, ainsi qu'une perte de contraste due à une moindre absorption des couches actives après les dommages chimiques.

Il est connu de protéger un empilement électrochrome déposé sur un substrat en verre par une couche de protection comprenant un film transparent de polymère adhésif pelable. Cependant ces films présentent pour inconvénients :
- un coût élevé,
- une étape de pelage longue, fastidieuse et susceptible de laisser des résidus, des marques, sur l'empilement électrochrome lors du retrait de ces films provoquant ainsi une altération sur la qualité du vitrage final,
- la nécessité de gérer les rebuts de films pelés, et
- la génération de défaut lors du pelage du film dû à son adhérence à la dernière couche de l'empilement électrochrome pouvant causer des délaminations locales très visibles de l'empilement électrochrome.

Il est également connu de protéger des substrats revêtus d'un revêtement fonctionnel par une couche protectrice organique ; celle-ci est alors éliminée par un traitement thermique à température élevée de type trempe c'est-à-dire à une température supérieure à 600°C, et cette étape d'élimination est souvent suivie d'une étape de lavage.

Ces procédés de protection ont pour inconvénients de fournir une protection seulement temporaire et doivent être éliminés avant obtention du système optique final ou du vitrage. Il est donc nécessaire de prévoir des étapes de retrait de la couche de protection, ce qui rend la fabrication de ce système optique ou de ce vitrage plus longue et plus complexe. En outre, après élimination ou pelage de la couche de protection, l'empilement électrochrome n'est plus protégé pour les étapes ultérieures de fabrication.

Il existe donc un besoin de protéger de manière simple la surface d'un empilement électrochrome déposé sur un substrat en verre pendant toutes les opérations de fabrication, que ce soient des étapes de transformation, de traitement mécanique, chimique ou thermique, de manipulation, de transport, de lavage, de stockage et/ou de découpe.

Un système optique conforme au préambule de la revendication 1 ci-jointe est connu des documents US5699192 A et US6115171 A.

A cet effet, l'invention a pour objet un système optique selon la revendication 1 ci-jointe.

Ainsi, l'empilement électrochrome du système optique selon l'invention est protégé de manière simple et efficace contre les frottements et donc contre les rayures pouvant être entraînées. En outre, la couche de protection limite également les risques de dégradations de l'empilement électrochrome dus à la corrosion chimique.

La couche de protection peut en particulier être déposée sur ledit empilement électrochrome. D'autres caractéristiques avantageuses et non limitatives du système optique selon l'invention sont les suivantes :
- le composé lubrifiant inorganique comprend au moins l'un des composés suivants : oxyde de titane TiOx, oxyde d'étain et de zinc SnZnOx, oxyde de titane et de strontium TiSrOx, oxynitrure de titane et de zirconium TiZrOxNy, oxyde de zirconium ZrOx ;
- la différence de transmission lumineuse entre l'élément optique et l'ensemble comprenant l'élément optique et ladite couche de protection est inférieure ou égale à 5% de la transmission de l'élément optique, de préférence inférieure ou égale à 4 % de la transmission de l'élément optique de préférence inférieure ou égale à 3 % de la transmission de l'élément optique, de préférence inférieure ou égale à 2 % de la transmission de l'élément optique, de préférence inférieure ou égale à 1 % de la transmission de l'élément optique ;
- la couche de protection est agencée sur ledit empilement électrochrome de manière à résister à toutes les étapes ultérieures de traitement du système optique ;
- l'ensemble comprenant l'élément optique et la couche de protection présente un coefficient de frottement réduit par rapport au coefficient de frottement de l'élément optique sans couche de protection, chaque coefficient de frottement étant déterminé par une mesure tribométrique standardisée ;
- l'ensemble comprenant l'élément optique et la couche de protection présente un coefficient de frottement qui diminue plus rapidement que le coefficient de frottement de l'élément optique sans couche de protection suite à des contaminations organiques, chaque coefficient de frottement étant déterminé par une mesure tribométrique standardisée ;
- l'ensemble comprenant l'élément optique et la couche de protection présente un coefficient de frottement qui atteint une valeur inférieure à 0,5, préférentiellement inférieure à 0,4, préférentiellement inférieure à 0,3 en un temps compris entre 1 et 100 heures ;
- ledit substrat est trempé ;
- il est prévu une couche de protection additionnelle comprenant un composé organique qui recouvre ladite couche de protection ;
- lequel ledit composé organique comprend du carbone ;
- la couche de protection additionnelle présente une épaisseur comprise entre 1 et 10 nanomètres, de préférence entre 2 et 5 nanomètres ;
- la couche de protection additionnelle est éliminable par un traitement thermique à une température comprise entre 300 et 500°C ;
- ladite électrode de travail est réalisée dans un matériau électrochrome, de préférence à base d'oxyde de tungstène WOx ou d'oxyde de tungstène et de lithium LiWOx et ladite contre-électrode est réalisée de préférence en oxyde d'un alliage tungstène-nickel, la couche de conducteur ionique comprend de préférence une couche d'oxyde de silicium SiOx, lesdites première et deuxième couches conductrices transparentes sont réalisées de préférence à base d'oxyde d'indium-étain (ITO) ;
- il comprend en outre, entre ledit substrat et la première couche conductrice transparente, une sous-couche comprenant de préférence une alternance d'au moins une couche à base d'oxyde de nobium et d'au moins une couche à base d'oxyde de silicium ; il peut s'agir d'une alternance de couches à base d'oxyde de nobium et de couches à base d'oxyde de silicium ;
- il comprend en outre une sur-couche agencée sur la deuxième couche conductrice transparente comprenant de préférence une couche à base d'oxyde de silicium.

L'invention concerne également un vitrage isolant comprenant un système optique tel que décrit précédemment, un espaceur et un autre substrat à fonction verrière assemblés entre eux. L'invention concerne également un procédé de fabrication d'un vitrage isolant comprenant un système optique tel que décrit précédemment, ledit procédé comprenant les étapes suivantes :
- formation de l'empilement électrochrome sur ledit substrat à fonction verrière,
- agencement de la couche de protection sur ledit empilement électrochrome,
- manipulation et/ou transformation et/ou traitement et/ou transport et/ou lavage et/ou stockage du système optique,
- préférentiellement, assemblage par feuilletage de la face du substrat à fonction verrière opposée à celle située du côté de l'empilement électrochrome avec un contre-substrat,
- assemblage dudit système optique, éventuellement feuilleté, avec un espaceur et un deuxième substrat à fonction verrière pour former le vitrage isolant.

Avantageusement, ce procédé comprend au moins l'une des étapes suivantes : une étape de découpe du substrat à fonction verrière, ou une étape de trempe du substrat à fonction verrière après l'étape de formation de l'empilement électrochrome.

L'invention concerne enfin un procédé de protection d'un élément optique selon la revendication 19 ci-jointe.
l'électrode et la contre-électrode, comprenant une étape d'agencement d'une couche de protection sur ledit empilement électrochrome, ladite couche de protection comprenant un composé lubrifiant inorganique.

Grâce au procédé selon l'invention, il est possible de protéger un élément optique comprenant un empilement électrochrome de manière simple et efficace, en particulier pour toutes les étapes ultérieures de manipulation nécessaire lors de la fabrication et de l'installation d'un vitrage comprenant un tel élément optique.

Avantageusement, il est prévu une étape additionnelle d'agencement d'une couche de protection additionnelle qui recouvre ladite couche de protection, la couche de protection additionnelle comprenant un composé organique, et une étape ultérieure d'élimination de la couche de protection additionnelle par un traitement thermique à une température comprise entre 300 et 500°C. Cette couche de protection additionnelle fournit une protection supplémentaire temporaire, limitée à certaines étapes d'utilisation de l'élément optique.

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] est une vue partielle en coupe d'un système optique selon l'invention,
[Fig. 2] est un schéma bloc illustrant un exemple de méthode de fabrication d'un vitrage isolant mettant en œuvre le système optique de la figure 1,
[Fig. 3] est un graphique montrant la force tangentielle Ft mesurée en Newton par une mesure tribométrique lors d'un test tribométrique comportant un aller-retour sur la surface du système optique selon l'invention.

Plusieurs modes de réalisation particuliers de l'invention sont décrits par la suite. Il est entendu que la présente invention n'est nullement limitée par ces modes de réalisation particuliers et que d'autres modes de réalisation peuvent parfaitement être mis en œuvre.

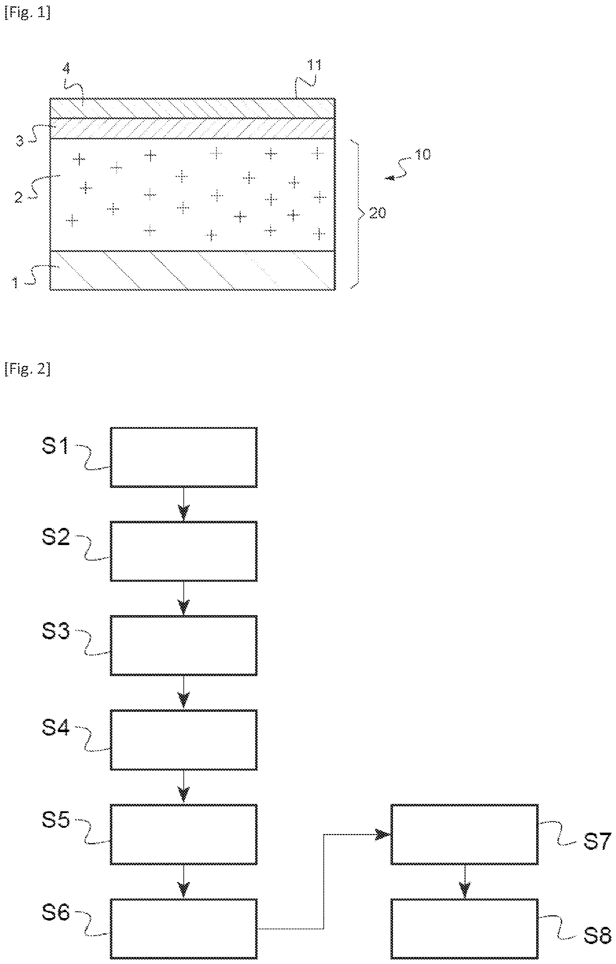

Comme illustré par la figure 1, l'invention se rapporte à un système optique 10 comprenant au moins :
- un élément optique 20 comprenant un substrat 1 à fonction verrière et un empilement électrochrome 2 formé sur ce substrat 1, et
- une couche de protection 3 agencée sur ledit empilement électrochrome 2, ladite couche de protection 3 comprenant un composé lubrifiant inorganique.

La couche de protection 3 peut notamment être déposée sur ledit empilement électrochrome 2.

L'empilement électrochrome 2 comporte ici :
- une première couche conductrice transparente,
- une électrode de travail agencée au-dessus de ladite première couche conductrice transparente,
- une contre-électrode agencée au-dessus de ladite électrode de travail,
- une seconde couche conductrice transparente agencée au-dessus de ladite contre-électrode,
- des ions Lithium introduits au sein dudit empilement électrochrome 2, et
- préférentiellement une couche d'un conducteur ionique distincte intercalée entre l'électrode et la contre-électrode.

A titre d'alternative, l'ordre des couches entre les deux couches conductrices transparentes peut être inversé : contre-électrode puis électrolyte et enfin matériau électrochrome.

L'agencement d'une couche « au-dessus », ou « en dessous » d'une autre ne signifie pas ici nécessairement que ces deux couches sont en contact direct l'une avec l'autre. Les termes « au-dessus » et « en-dessous » se réfèrent ici à l'ordre d'agencement de ces différents éléments. L'ordre d'agencement des couches est choisi de manière arbitraire par rapport au substrat à fonction verrière. De manière alternative, un tel ordre d'agencement peut être inversé, par rapport à ce même substrat. De plus, deux couches déposées l'une au-dessus de l'autre peuvent par exemple être physiquement séparés par une ou plusieurs couches intermédiaires.

Dans le même esprit, le terme « entre » ne signifie pas nécessairement que trois éléments désignés sont en contact directs les uns avec les autres.

De manière similaire, on emploie l'expression « formée sur » pour exprimer le fait qu'une couche est disposée d'un côté donné d'une autre couche. Cette expression n'implique pas que la couche considérée soit formée « directement » sur l'autre couche. D'autres couches intermédiaires peuvent être agencées entre ladite couche et l'autre couche.

D'un point de vue structurel, et de manière connue, l'empilement électrochrome 2 comprend les deux électrodes intercalées entre les deux couches électro-conductrices transparentes. Au moins une de ces électrodes est constituée d'un matériau électrochrome qui, par définition, est adapté pour insérer réversiblement et simultanément des ions et des électrons, les états d'oxydation correspondant aux états insérés et dé-sinsérés étant de coloration distincte, un des états présentant une transmission lumineuse plus élevée que l'autre. La réaction d'insertion ou de désinsertion est commandée au moyen des deux couches conductrices transparentes dont l'alimentation électrique est assurée par un générateur de courant ou un générateur de tension.

Ainsi les deux électrodes comprennent une électrode de travail et une contre-électrode.

L'électrode de travail est ici de préférence constituée d'un matériau électrochrome cathodique adapté pour capter des ions lorsqu'une tension est appliquée aux bornes du système électrochrome. L'état teinté de l'électrode de travail correspond à son état le plus réduit. Le matériau électrochrorne cathodique est de préférence à base d'oxyde de tungstène WOx ou d'oxyde de tungstène et de lithium LiWOx. En variante, le matériau électrochrome de l'électrode de travail peut être un matériau électrochrome anodique à base d'oxyde d'iridium.

Ces matériaux électrochromes peuvent insérer des cations, notamment des protons ou des ions lithium.

La contre-électrode est capable elle aussi d'insérer de façon réversible des cations, symétriquement par rapport à l'électrode de travail. En d'autres termes, cette contre-électrode est ainsi adaptée pour céder des ions lorsqu'une tension est appliquée aux bornes du système électrochrome. Cette contre-électrode est constituée d'une couche neutre en coloration, ou du moins transparente ou peu colorée quand l'électrode de travail est à l'état clair, et présente de manière préférentielle une coloration à l'état oxydé de sorte à augmenter le contraste total de l'empilement électrochrome, entre son état teinté et son état clair. La contre-électrode est de préférence à base d'un oxyde d'un élément choisi parmi le tungstène, le nickel, l'iridium, le chrome, le fer, le cobalt, le rhodium, ou à base d'un oxyde mixte d'au moins deux de ces éléments, notamment l'oxyde mixte de nickel et de tungstène.

L'électrode de travail et la contre-électrode sont séparées par une région interfaciale communément appelée « electrolyte » (en langue anglaise : Ion-Conductor (IC)) ayant une double fonction de conducteur ionique et d'isolant électrique. La couche à conduction ionique empêche donc tout court-circuit entre l'électrode de travail et la contre-électrode. Elle permet de plus aux deux électrodes de retenir une charge et de maintenir ainsi leurs états clair et teinté.

Selon un mode de réalisation particulier, la couche de conducteur ionique est formée par dépôt entre l'électrode de travail et la contre-électrode d'une couche intermédiaire distincte. Les limites entre ces trois couches sont définies par des changements brusques de composition et/ou de microstructure. De tels empilements électrochromes ont donc au moins trois couches distinctes séparées par deux interfaces abruptes distinctes.

En particulier, l'électrolyte peut se présenter sous la forme d'un polymère ou d'un gel, notamment un polymère à conduction protonique, par exemple tel que ceux décrits dans les brevets européens EP 0 253 713 et EP 0 670 346, ou un polymère à conduction d'ions lithium, par exemple tel que ceux décrits dans les brevets EP 0 382 623, EP 0 518 754 ou EP 0 532 408. On parle alors d'empilement électrochrome mixte.

Cet électrolyte peut également être constitué d'une couche minérale formant un conducteur ionique qui est isolé électriquement, par exemple tel que ceux décrits dans les brevets européens EP 0 867 752 et EP 0 831 360. On parle alors d'un empilement électrochrome « tout solide ».

L'empilement électrochrome peut également être du type « tout polymère », dans lequel deux couches conductrices sont disposées de part et d'autre d'un empilement comprenant un polymère à coloration cathodique, un polymère isolant électronique conducteur ionique (de H+ ou Li+ tout particulièrement) et enfin un polymère à coloration anodique (tel que la polyaniline ou le polypyrrole).

La couche de conducteur ionique peut être sous la forme d'une solution gélifiée et/ou d'un polymère conducteur ionique et/ou d'une ou plusieurs couche(s) minérale(s) déposée(s) par pulvérisation cathodique magnétron, par dépôt chimique en phase vapeur (CVD en langue anglaise) ou procédé sol-gel.

La couche de conducteur ionique comprend ici de préférence une couche d'oxyde de silicium SiOx.

De manière alternative, l'électrode de travail et la contre-électrode sont déposées l'une au-dessus de l'autre et généralement en contact l'une avec l'autre, et une région de transition ayant fonction d'électrolyte n'est formée qu'ultérieurement, par migration de composants au sein des électrodes au cours du processus de fabrication et en particulier au cours des phases de chauffe de l'empilement électrochrome 2.

L'empilement électrochrome peut également comprendre diverses couches, notamment des sous-couches de préférence à base d'oxydes, des sur-couches de préférence à base d'oxydes ou des couches intermédiaires, destinées par exemple à faciliter le dépôt d'une couche subséquente, ou à protéger certaines couches contre les agressions mécaniques ou chimiques (résistance à la corrosion, à l'abrasion etc.). Certaines de ces sous-couches et sur-couches sont décrites plus en détail ultérieurement.

Bien entendu les deux couches conductrices doivent être réunies à des connecteurs d'amenée de courant respectifs. Cette connexion est habituellement obtenue au moyen de clinquants métalliques qui sont respectivement mis en contact avec la première couche conductrice et avec la couche conductrice. Les amenées de courant peuvent également être obtenues par une technique de sérigraphie, notamment à base d'argent qui peuvent aussi être déposés sur la deuxième couche conductrice transparente notamment sous forme de barres conductrices de courant (en anglais « bus bars »). Par « couche conductrice » on entend ici une couche conductrice de l'électricité, en d'autres termes, une couche électroconductrice.

Selon un mode réalisation préféré, l'empilement électrochrome est de préférence « tout solide » et comprend successivement à partir du substrat :
- la première couche conductrice, de préférence à base d'ITO, présentant une épaisseur de 420 nm ; en variante il peut s'agir d'une couche d'oxyde d'étain dopé au fluor ou à l'antimoine, ou d'un multicouche comportant un empilement de couches du type ITO/ZnO :AI/Ag/ZnO :AI/ITO, notamment d'épaisseurs respectives 15 à 20 nm pour l'ITO/ 60 à 80 nm pour le ZnO :AI/ 3 à 15 nm pour l'argent/ 60 à 80 nm pour le ZnO :AI/15 à 20 nm pour l'ITO,
- l'électrode de travail sous la forme d'une couche de matériau électrochrome cathodique, de préférence à base d'oxyde de tungstène WO3 ou d'oxyde mixte de vanadium et de tungstène, présentant par exemple une épaisseur de 400 nm,
- la couche d'un électrolyte conducteur ionique, de préférence constituée d'une couche en dioxyde de silicium, typiquement de 5 nm d'épaisseur,
- la contre-électrode, ici anodique, de préférence en oxyde d'un alliage de tungstène-nickel, présentant par exemple une épaisseur de 270 nm d'épaisseur,
- la deuxième couche conductrice transparente, de préférence à base d'ITO, présentant par exemple une épaisseur de 420 nm, ou de SnO2 :F, ou en variante une couche conductrice supérieure comportant d'autres éléments conducteurs : il peut s'agir plus particulièrement d'associer la couche conductrice à une couche plus conductrice qu'elle, et/ou à une pluralité de bandes ou de fils conducteurs. On se reportera pour plus de détails à la demande WO-00/57243 pour la mise en œuvre de telles couches conductrices multi-composantes.

Chaque couche est de préférence déposée par pulvérisation cathodique assistée par champ magnétique. En variante, chaque couche pourrait être obtenue par évaporation thermique ou assistée par un flux d'électrons, par ablation laser, par dépôt chimique en phase vapeur (CVD en langue anglaise), éventuellement assistée par plasma ou par micro-ondes, ou par une technique à pression atmosphérique, notamment par dépôt de couches par synthèse sol-gel, notamment de type trempé, revêtement par pulvérisation (spray-coating en langue anglaise) ou enduction laminaire.

De plus, le système optique 10 selon l'invention est adapté pour subir une trempe après dépôt de l'empilement électrochrome 2. Le système optique 10 comporte alors de préférence un empilement électrochrome 2 adapté à résister aux étapes de trempe, c'est-à-dire à résister à un traitement thermique avec chauffage à une température d'au moins 650° Celsius.

De préférence, ici, l'empilement électrochrome 2 est directement en contact avec ledit substrat 1.

En variante, une ou plusieurs couches intermédiaires peuvent être agencées entre le substrat 1 et l'empilement électrochrome 2.

Le substrat 1 à fonction verrière peut notamment être constitué de tout matériau adapté à la fabrication de vitrage. Il peut notamment s'agir d'un matériau vitrifié, de verre ou d'un matériau plastique adapté.

Le substrat en verre du système optique selon l'invention est notamment un substrat de type silico-sodo-calcique et présente une épaisseur comprise entre 1,5 millimètres (mm) à 6 mm, de préférence une épaisseur égale à 2,1 mm. Le substrat de verre est de préférence du type flotté, c'est-à-dire susceptible d'avoir été obtenu par un procédé consistant à déverser le verre fondu sur un bain d'étain en fusion (bain « float »).

Le substrat 1 peut être trempé ou non. Il peut présenter n'importe quelle épaisseur. Il peut présenter toute caractéristique optique ; notamment être teinté ou non.

De préférence, ici, la couche de protection 3 est directement en contact avec l'empilement électrochrome 2. En variante, une ou plusieurs couches intermédiaires peuvent être agencées entre l'empilement électrochrome 2 et la couche de protection 3.

La couche de protection 3 peut former la face externe du système optique 10. En variante, une ou plusieurs couches additionnelles peuvent être agencées au-dessus de la couche de protection 3 et former la face externe du système optique, comme cela est le cas par exemple dans le mode de réalisation de l'invention représenté sur la figure 1. Le système optique 10 de la figure 1 comprend ici une couche additionnelle 4 qui sera décrite plus en détails ultérieurement.

La couche de protection 3 comporte au moins un composé lubrifiant inorganique.

Selon un mode de réalisation du système optique selon l'invention, il comprend une unique couche de protection comprenant ledit composé lubrifiant inorganique. Cette couche de protection est de préférence agencé en contact direct avec l'empilement électrochrome et forme la face externe du système optique.

Selon un autre mode de réalisation du système optique selon l'invention, il comprend une pluralité de couches de protection comprenant chacune un composé lubrifiant inorganique. Cette pluralité de couches de protection est de préférence agencée en contact direct avec l'empilement électrochrome et forme la face externe du système optique.

Selon un autre mode de réalisation du système optique selon l'invention, il comprend une pluralité de couches de protection, dont au moins une comprenant ledit composé lubrifiant inorganique. En particulier, le système optique 10 selon l'invention peut comprendre la couche de protection :3 contenant le composé lubrifiant inorganique et la couche additionnelle 4 qui comprend un autre composé, par exemple un composé organique, comme cela est par exemple représenté schématiquement sur la figure 1.

De préférence, la couche additionnelle 4 est agencée au-dessus de la couche de protection 3. Cette couche additionnelle 4 forme ici la face externe 11 du système optique 10. La couche de protection est de préférence agencée en contact direct avec l'empilement électrochrome 2, entre celui-ci et la couche additionnelle 4.

Lorsque la couche de protection 3 est en contact direct avec l'empilement électrochrome, cela signifie qu'elle est en contact avec l'une des deux couches conductrices transparentes ou avec la sur-couche agencée au-dessus de la couche conductrice transparente la plus éloignée du substrat 1.

Quel que soit le mode de réalisation considérée, ledit composé lubrifiant inorganique de la couche de protection 3 comprend de préférence au moins l'un des composés suivants : oxyde de titane TiOx, oxyde d'étain et de zinc SnZnOx, oxyde de titane et de strontium TiSrOx, oxynitrure de titane et de zirconium TiZrOxNy, oxyde de zirconium ZrOx, oxyde d'Hafnium HfOx, oxyde de Cérium CeOx.

La couche de protection 3 présente une épaisseur comprise entre 1 et 30 nanomètres, de préférence entre 2 et 15 nanomètres, de préférence entre 2 et 10 nanomètres.

Avantageusement, les caractéristiques de la couche de protection 3 telles que sa composition chimique et son épaisseur sont déterminées de telle sorte que la différence de transmission lumineuse entre l'élément optique et l'ensemble comprenant l'élément optique et ladite couche de protection est inférieure ou égale à 5% de la transmission de l'élément optique, de préférence inférieure ou égale à 4%, de préférence inférieure ou égale à 3%, de préférence inférieure ou égale à 2%, de préférence inférieure ou égale à 1 % de la transmission de l'élément optique.

La transmission lumineuse de l'élément optique 20 est définie comme le rapport de l'intensité lumineuse d'un faisceau lumineux ayant traversé cet élément optique 20 et de l'intensité lumineuse du faisceau lumineux incident sur l'élément optique 20 correspondant.

En d'autres termes, la couche de protection 3 est de préférence transparente.

Elle est également très fine par rapport à l'épaisseur de l'élément optique 20. L'empilement électrochrome 2 seul présente déjà une épaisseur comprise typiquement entre 1 et 2 micromètres, soit une épaisseur environ 100 fois plus grande que celle de la couche de protection 3.

Ainsi, la variation de transmission lumineuse entraînée par l'agencement de la couche de protection 3 sur l'élément optique 20 est limitée. La couche de protection 3, qui est amenée à rester sur l'empilement électrochrome 2 non seulement pendant le processus de fabrication du vitrage, mais également au cours de l'utilisation du vitrage lorsque celui-ci est installé dans un bâtiment, a un effet limité sur la transmission lumineuse de l'ensemble comprenant l'élément optique 20 et la couche de protection 3. En particulier, la réduction de transmission lumineuse due à la présence de la couche de protection est limitée. Le système optique 10 obtenu présente des caractéristiques optiques appropriées pour son utilisation dans un vitrage de bâtiment.

La couche de protection 3 protège l'ensemble optique 20, et notamment l'empilement électrochrome 2 contre les rayures dues aux frottements pouvant endommager l'empilement électrochrome après son agencement sur le substrat 1 et durant toutes les étapes ultérieures de manipulation de l'ensemble comprenant l'élément optique 20 et la couche de protection 3, c'est-à-dire toutes les étapes mises en œuvre après l'agencement de la couche de protection sur l'empilement électrochrome.

La couche de protection 3 protège l'empilement électrochrome 2 grâce à son effet lubrifiant.

Cet effet lubrifiant est quantifié par la réduction du coefficient de frottement µ de la face externe 11 du système optique 10 comparé au coefficient de frottement µi de la face externe de l'empilement électrochrome 2 sans couche de protection.

Plus précisément, l'ensemble comprenant l'élément optique 20 et la couche de protection 3 présente un coefficient de frottement µ réduit par rapport au coefficient de frottement µi de l'élément optique 20 sans couche de protection, ces coefficients de frottement étant déterminés par des mesures tribométriques standardisées.

De manière classique, le tribomètre permet de mesurer la force tangentielle Ft d'un frotteur en fonction de son déplacement sur une surface donnée pour une force normale Fn appliquée connue. Le ratio entre la force tangentielle et la force normale donne alors le coefficient de frottement m.

A cet effet, le tribomètre comprend un bras de mesure et un support porte-échantillon.

Le bras de mesure est relié à un bâti. Il comporte à son extrémité un pion muni à son extrémité libre d'un frotteur. Une masse est rapportée à l'extrémité du bras, au droit du pion.

Le support s'étend dans un plan orthogonal à l'axe du pion, sous celui-ci, et est mobile au moins dans une direction de ce plan, de préférence selon deux directions orthogonales de ce plan.

Par exemple, le support comprend une platine motorisée adaptée à être déplacée selon deux directions orthogonales, dans les deux sens pour chaque direction. L'échantillon, ici un système optique 10 selon l'invention, est placé sur le support porte-échantillon. Le substrat est placé contre le support et la face externe 11 du système optique 10 dont le coefficient de frottement doit être déterminé est placée à l'opposé du support, au contact du pion.

La masse applique alors sur l'échantillon placé sous le pion, au contact de celui-ci, une force normale égale à son poids. L'échantillon est déplacé. La force tangentielle exercée par le pion sur la surface est mesurée.

Pour faire une mesure, on réalise de préférence une pluralité de tests. Pendant chaque test, le frotteur du pion est plaqué contre l'échantillon à tester par application de la force normale et le support est déplacé selon l'une des deux directions orthogonales, le long d'une piste de longueur prédéterminée. Chaque test est effectué sur une piste différente.

De manière générale, le coefficient de frottement est par exemple déterminé à l'aide d'un tribomètre commercial, par exemple le tribomètre Plint TE79. Les paramètres de mesures sont par exemple les suivants :
i) aucun lubrifiant supplémentaire (autre que la ou les couche(s) de protection et la ou les couche(s) additionnelle(s)),
ii) humidité relative d'environ 50% à 20°C,
iii) le pion de mesure comporte une pointe en forme de boule de rayon 10 millimètres, iv) la force normale est de 3 Newtons, et
v) la vitesse de défilement de l'échantillon est de 1 millimètre par seconde.

En outre, selon un exemple de mesure particulier, la longueur de piste est de 10 mm et deux pistes sont séparées par au moins 3 mm, de préférence entre 3 et 5 mm, selon la direction orthogonale aux pistes.

On réalise de préférence un seul aller-retour le long de chaque piste.

On utilise un frotteur différent pour chaque échantillon pour améliorer la reproductibilité.

Pour chaque échantillon, on fait au minimum trois tests, le long de trois pistes différentes. On fait ensuite la moyenne des résultats de mesure de ces tests.

Le frotteur est nettoyé à l'aide d'un papier propre imbibé d'éthanol entre chaque échantillon.

On peut utiliser des frotteurs métalliques, par exemple en inox ou plastique, par exemple en polyacétal.

La force tangentielle mesurée présente une norme identique lors de l'aller et du retour du test, mais elle est orientée dans des directions opposées au cours des deux phases de ce mouvement. En conséquence, la force tangentielle mesurée est égale à Ft dans le sens de l'aller et -Ft dans le sens du retour du test.

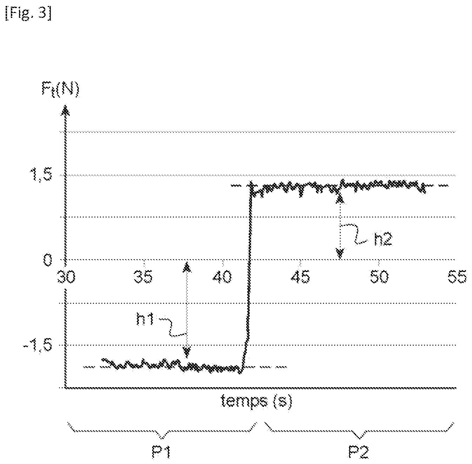

En conséquence, lors de la mesure de ladite force tangentielle Ft en fonction du temps, on observe deux paliers P1, P2 visibles sur la Figure 3. Le premier palier P1 rassemble tous les points enregistrés durant le premier passage du frotteur (aller) et le second P2 ceux qui sont enregistrés durant le retour du frotteur sur la même piste.

Si l'offset du triboniètre est bien réglé, on obtient des valeurs h1 et h2 (figure 3) de norme, de la force tangentielle pour l'aller et le retour identiques. Le deuxième passage du frotteur (retour) en sens inverse n'est plus nécessaire.

Mais en pratique, il est difficile de régler parfaitement l'offset. C'est donc pour s'affranchir de son influence qu'on procède par aller-retour.

De manière générale on prend en compte tous les points positionnés sur le palier haut P1 et le palier bas P2 pour effectuer une moyenne et déterminer la force tangentielle. En pratique, cette force tangentielle est calculée comme la moyenne des valeurs absolues de la valeur moyenne de la force tangentielle mesurée pour chaque palier, soit Ft = (| moyenne (palier P1) | + | moyenne (palier P2) |)/2 pour un aller-retour.

Le coefficient de frottement est calculé par la formule : µ = Ft / Fn ; avec ici Ft = (| moyenne (palier P1)| + | moyenne (palier P2) |)/2 et Fn = 3N.

Si les données expérimentales recueillies ne montrent pas la présence des deux paliers P1 et P2, ces données expérimentales sont écartées. De préférence, l'écart type des points situés sur chaque palier P1, P2 doit être inférieur à 0,1 pour assurer une bonne précision de la mesure. Il est généralement de 0,05 pour une force tangentielle égale à 0,5N. En conséquence, si l'écart type des données expérimentales correspondant aux points de chaque palier P1, P2 est supérieur à 0,1, ces données expérimentales ne sont pas prises en compte.

Ce mode de mesure composé d'un seul aller-retour permet d'endommager le moins possible la surface testée et d'obtenir le plus souvent et selon le type de frotteur des mesures reproductibles.

En outre, cette situation se rapproche des conditions dans lesquelles les rayures sont formées à la surface de l'empilement électrochrome 2 non protégé, puisqu'elles sont le plus souvent le résultat d'un unique frottement dans un seul sens.

L'allure des données expérimentales recueillies pour une mesure du coefficient de frottement de l'empilement électrochrome protégé par la couche de protection sont par exemple représentées sur la figure 3. Le coefficient de frottement déterminé à partir des données expérimentales représentées sur cette figure est égal à environ 0,5.

De manière générale, il est connu que la réduction du coefficient de frottement d'une surface est corrélée à une augmentation de la résistance aux rayures de cette surface. La résistance aux rayures est par exemple mesurée à l'aide d'un appareil de test de résistance à la rayure tel que ceux commercialisés par la société Erichsen.

Par ailleurs, selon une autre caractéristique avantageuse du système optique selon l'invention, l'ensemble comprenant l'élément optique 20 et la couche de protection 3 présente un coefficient de frottement µ qui diminue plus rapidement que le coefficient de frottement µi de l'élément optique 20 sans couche de protection suite à des contaminations organiques, ce coefficient de frottement étant déterminé par une mesure tribométrique standardisée telle que celle décrite précédemment.

De préférence, l'ensemble comprenant l'élément optique 20 et la couche de protection 3 présente un coefficient de frottement qui atteint une valeur inférieure à 0,5, préférentiellement inférieure à 0,4, préférentiellement inférieure à 0,3 en un temps compris entre 1 et 100 heures.

La diminution progressive du coefficient de frottement de la face externe 11 du système optique 10 selon l'invention c'est-à-dire après l'agencement de la couche de protection sur l'empilement électrochrome 2 est due à la capacité de cette couche de protection 3 à adsorber des composés organiques telles que des composés hydrocarbonés à sa surface. Ces composés organiques contribuent à réduire le coefficient de frottement et à augmenter la résistance aux rayures car les composés organiques adsorbés à la surface de la couche de protection jouent le rôle d'une couche sacrificielle additionnelle pendant le frottement.

Le système optique 10 selon l'invention peut en outre comprendre une couche de protection additionnelle 4 comprenant un composé organique qui recouvre ladite couche de protection 3. Cela est le cas par exemple dans le système optique 10 de la figure 1.

Ce composé organique comprend par exemple du carbone, en particulier du carbone amorphe ou du carbone de type diamant.

Cette couche de protection additionnelle 4 présente par exemple une épaisseur comprise entre 1 et 10 nanomètres, de préférence entre 2 et 5 nanomètres, de préférence entre 2 et 4 nanomètres, de préférence entre 2 et 3 nanomètres.

Alors que la couche de protection 3 est agencée au-dessus dudit empilement électrochrome 2 de manière à résister à toutes les étapes ultérieures de traitement ou d'utilisation du système optique 10, la couche de protection additionnelle 4 est de préférence éliminable par un traitement thermique à une température comprise entre 300 et 500°C.

Ainsi, la couche de protection additionnelle 4 protège l'empilement électrochrome 2 et la couche de protection 3 pour toutes les étapes de traitement et toutes les manipulations du système optique 10 intervenant avant la trempe de ce système optique 10. Lors de la trempe, le système optique 10 est chauffé à des températures typiquement supérieures à 500°Celsius, par exemple d'environ 650°Celsius, puis est refroidi rapidement. Cela permet d'améliorer les propriétés mécaniques du substrat, notamment lorsque celui-ci est en verre.

Cette étape de trempe élimine la couche de protection additionnelle 4. La couche de protection 3 est au contraire conservée. Cette couche de protection 3 reste à la surface de l'empilement électrochrome 2 après la trempe et continue de le protéger pendant les étapes de traitement et les manipulations du système optique 10 intervenant après la trempe.

La couche de protection additionnelle 4 étant éliminée par la trempe du système optique 10, elle peut présenter toute caractéristique optique, notamment être opaque, c'est-à-dire avoir un coefficient de transmission très faible, par exemple inférieur à 50%.

En outre, cette couche de protection additionnelle 4 est éliminée par une étape de traitement du système optique déjà existante. Il n'est donc pas nécessaire de modifier le traitement du système optique.

Le système optique 10 peut comprendre en outre, entre ledit substrat 1 et la première couche conductrice transparente de l'empilement électrochronie 2, une sous-couche comprenant de préférence une alternance de couches de matériau à haut indice, par exemple une couche à base d'oxyde de nobium ou d'oxyde de titane et de couches d'un matériau à bas indice, par exemple une couche à base d'oxyde de silicium. Ladite sous-couche présente de préférence une épaisseur inférieure ou égale à 100 nanomètres, de préférence inférieure ou égale à 90 nanomètres, de préférence inférieure ou égale à 80 nanomètres, de préférence inférieure ou égale à 70 nanomètres, de préférence inférieure ou égale à 60 nanomètres, de préférence inférieure ou égale à 50 nanomètres, de préférence inférieure ou égale à 40 nanomètres, de préférence inférieure ou égale à 30 nanomètres, de préférence inférieure ou égale à 30 nanomètres, de préférence inférieure ou égale à 20 nanomètres, de préférence inférieure ou égale à 10 nanomètres.

Cette sous-couche comprend par exemple une couche de 10 nanomètres d'oxyde de niobium ou d'oxyde de titane et une couche de 20 nanomètres d'oxyde de silice. Une telle sous-couche permet notamment d'empêcher la diffusion des alcalins depuis le substrat vers l'empilement électrochrome.

Le système optique 10 peut également comprendre une sur-couche agencée, par exemple déposée, sur la deuxième couche conductrice transparente de l'empilement électrochronie 2 comprenant de préférence une couche d'un matériau de bas indice, par exemple une couche d'oxyde de silicium, ou une alternance de couches de matériau à haut indice et bas indice, par exemple une alternance de couches à base de nitrure de silicium et d'oxyde de silicium. Ladite sur-couche présente de préférence une épaisseur inférieure ou égale à 100 nanomètres, de préférence inférieure ou égale à 90 nanomètres, de préférence inférieure ou égale à 80 nanomètres, de préférence inférieure ou égale à 70 nanomètres, de préférence inférieure ou égale à 60 nanomètres, de préférence inférieure ou égale à 50 nanomètres, de préférence inférieure ou égale à 40 nanomètres, de préférence inférieure ou égale à 30 nanomètres, de préférence inférieure ou égale à 20 nanomètres, de préférence inférieure ou égale à 10 nanomètres.

Cette sur-couche comprend par exemple une couche de 70 nanomètres de dioxyde de silicium. Une telle sur-couche permet notamment de contrôler la couleur en transmission et la transmission lumineuse de l'empilement électrochrome.

On entend ici par matériau de haut indice de réfraction n, un matériau d'indice supérieur à 1,8. On entend ici par matériau de bas indice, un matériau d'indice inférieur à 1,8.

Selon l'invention, le système optique 10 décrit précédemment peut notamment être utilisé dans un vitrage de bâtiment, notamment vitrage extérieur de cloison interne ou de porte vitrée, en tant que vitrage équipant les cloisons internes ou les fenêtres de moyens de transport du type train, avion, voiture, bateau, en tant que vitrages d'écran de visualisation du type écran d'ordinateur ou de télévision, pour des objectifs d'appareils photographiques ou des protections de panneaux solaires.

L'invention concerne ainsi également un vitrage isolant comprenant un système optique 10 tel que décrit précédemment, un espaceur et un autre substrat à fonction verrière assemblés entre eux.

En particulier, le système optique selon l'invention peut être incorporé dans différentes configurations de vitrage dans lequel les différents éléments optiques peuvent être organisés différemment pour former :
- un simple vitrage comprenant l'empilement électrochrome 2, le substrat 1 sous la forme d'une feuille de verre et la couche de protection 3, agencé de préférence pour placer l'empilement électrochrome 2 à l'intérieur du bâtiment ;
- un double vitrage comprenant, préférentiellement de l'extérieur vers l'intérieur du bâtiment, le le substrat 1 sous la forme d'une feuille de verre, l'empilement électrochrome 2, la couche de protection 3, une lame de gaz inerte, un revêtement bas émissif et un autre substrat sous la forme d'une autre feuille de verre ;
- un triple vitrage comprenant, préférentiellement de l'extérieur vers l'intérieur du bâtiment, le substrat 1 sous la forme d'une feuille de verre, l'empilement électrochrome 2, la couche de protection 3, une lame de gaz inerte, une feuille de verre, une lame de gaz inerte, un revêtement bas émissif et un autre substrat sous la forme d'une autre feuille de verre.

Le gaz inerte peut notamment être de l'argon.

L'invention concerne en outre un procédé de fabrication d'un tel vitrage isolant comprenant un système optique 10 tel que décrit précédemment, ledit procédé comprenant les étapes suivantes, qui sont représentées schématiquement sur la figure 2:
- formation S1 de l'empilement électrochrome 2 sur ledit substrat 1 à fonction verrière,
- agencement S2 de la couche de protection 3 sur ledit empilement électrochrome 2,
- manipulation et/ou transformation et/ou traitement et/ou transport et/ou lavage et/ou stockage du système optique 10 (bloc S6 de la figure 2),
- préférentiellement, assemblage S7 par feuilletage de la face du substrat 1 à fonction verrière opposée à celle située du côté de l'empilement électrochrome 2 avec un contre-substrat,
- assemblage S8 dudit système optique 10, éventuellement feuilleté, avec un espaceur et un deuxième substrat 1 à fonction verrière pour former le vitrage isolant.

Avantageusement, le procédé selon l'invention comprend également une étape d'agencement S3 de la couche de protection additionnelle 4 sur la couche de protection 3.

Avantageusement, ce procédé comprend au moins l'une des étapes suivantes : une étape de découpe S4 du substrat 1 à fonction verrière, et/ou une étape de trempe S5 du substrat 1 à fonction verrière après l'étape de formation de l'empilement électrochrome 2.

Préférentiellement, l'étape de découpe a lieu après l'agencement de la couche de protection 3 et éventuellement de la couche de protection additionnelle 4, avant l'étape de trempe SS du système optique.

L'invention concerne enfin un procédé de protection de l'élément optique 20 comprenant le substrat 1 à fonction verrière et l'empilement électrochrome 2 formé sur ce substrat 1, comprenant une étape d'agencement de la couche de protection 3 sur ledit empilement électrochrome 2.

Il peut s'agir notamment d'une étape de dépôt de la couche de protection 3, en particulier d'une étape de dépôt magnétron.

Il peut s'agir également d'un dépôt par voie liquide.

Grâce au procédé selon l'invention, il est possible de protéger l'élément optique 20 comprenant l'empilement électrochrome 2 de manière simple et efficace, en particulier pour toutes les étapes de manipulation nécessaire lors de la fabrication et de l'installation d'un vitrage comprenant un tel élément optique 10 ayant lieu après l'agencement de la couche de protection.

Avantageusement, il est prévu une étape additionnelle d'agencement de la couche de protection additionnelle 4 qui recouvre ladite couche de protection 3, et une étape ultérieure d'élimination de la couche de protection additionnelle par un traitement thermique à une température comprise entre 300 et 500°C.

Il s'agit en particulier d'une étape de dépôt de la couche de protection additionnelle 4, par exemple par magnétron.

On entend ici par « élimination de la couche de protection additionnelle par un traitement thermique», qu'il est observé sur la couche de protection 3 :
- aucun résidu de couche de protection additionnelle 4 suite audit traitement thermique, ou
- quelques résidus de couche de protection additionnelle 4 suite audit traitement thermique, mais ces résidus sont facilement enlevés par un essuyage à l'aide d'un chiffon ou par un lavage.

Cette couche de protection additionnelle 4 fournit une protection supplémentaire temporaire, limitée à certaines étapes d'utilisation de l'élément optique.

L'empilement électrochrome du système optique selon l'invention est protégé de manière simple et efficace contre les frottements et donc contre les rayures pouvant être entraînées par ces frottements. En outre, la couche de protection limite également les risques de dégradations de l'empilement électrochrome dus à la corrosion chimique.

## Revendications

1. Système optique (10) comprenant :
- un élément optique (20) comprenant un substrat (1) à fonction verrière et un empilement électrochrome (2) formé sur ce substrat (1), cet empilement électrochrome (2) comportant une première couche conductrice transparente, une électrode de travail agencée au-dessus de ladite première couche conductrice transparente, une contre-électrode agencée au-dessus de ladite électrode de travail, une seconde couche conductrice transparente agencée au-dessus de ladite contre-électrode, des ions Lithium introduits au sein dudit empilement électrochrome, et, préférentiellement, une couche d'un conducteur ionique distincte intercalée entre l'électrode et la contre-électrode,
- une couche de protection (3) agencée sur ledit empilement électrochrome (2), ladite couche de protection (3) comprenant un composé lubrifiant inorganique, **caractérisé en ce que** ladite couche de protection (3) présente une épaisseur comprise entre 1 et 30 nanomètres, de préférence entre 2 et 15 nanomètres de préférence entre 2 et 10 nanomètres, de préférence entre 2 et 5 nanomètres.

2. Système optique (10) selon la revendication 1, dans lequel le composé lubrifiant inorganique comprend au moins l'un des composés suivants : oxyde de titane TiOx, oxyde d'étain et de zinc SnZnOx, oxyde de titane et de strontium TiSrOx, oxynitrure de titane et de zirconium TiZrOxNy, oxyde de zirconium ZrOx.

3. Système optique (10) selon l'une des revendications 1 et 2, dans lequel la différence de transmission lumineuse entre l'élément optique (20) et l'ensemble comprenant l'élément optique (20) et ladite couche de protection (3) est inférieure ou égale à 5% de la transmission de l'élément optique (20), de préférence inférieure ou égale à 4 % de la transmission de l'élément optique de préférence inférieure ou égale à 3 % de la transmission de l'élément optique, de préférence inférieure ou égale à 2 % de la transmission de l'élément optique, de préférence inférieure ou égale à 1 % de la transmission de l'élément optique.

4. Système optique (10) selon l'une des revendications 1 à 3, dans lequel la couche de protection (3) est agencée sur ledit empilement électrochrome (2) de manière à résister à une étape de trempe, lors de laquelle le système optique (10) est chauffé à des températures supérieures à 500°Celsius, par exemple d'environ 650°Celsius, puis est refroidi rapidement.

5. Système optique (10) selon l'une des revendications 1 à 4, dans lequel l'ensemble comprenant l'élément optique (10) et la couche de protection (3) présente un coefficient de frottement (µ) réduit par rapport au coefficient de frottement (µi) de l'élément optique (20) sans couche de protection (3), chaque coefficient de frottement étant déterminé par une mesure tribométrique standardisée.

6. Système optique (10) selon l'une des revendications 1 à 5, dans lequel l'ensemble comprenant l'élément optique (20) et la couche de protection (3) présente un coefficient de frottement (µ) qui diminue plus rapidement que le coefficient de frottement (µi) de l'élément optique (20) sans couche de protection (3) suite à des contaminations organiques, chaque coefficient de frottement étant déterminé par une mesure tribométrique standardisée.

7. Système optique (10) selon l'une des revendications 1 à 6, dans lequel l'ensemble comprenant l'élément optique (20) et la couche de protection (3) présente un coefficient de frottement (µ) qui atteint une valeur inférieure à 0,5, préférentiellement inférieure à 0,4, préférentiellement inférieure à 0,3 en un temps compris entre 1 et 100 heures.

8. Système optique (10) selon l'une des revendications 1 à 7, dans lequel ledit substrat (1) est trempé.

9. Système optique (10) selon l'une des revendications 1 à 8, dans lequel il est prévu une couche de protection additionnelle (4) comprenant un composé organique qui recouvre ladite couche de protection (3).

10. Système optique (10) selon la revendication 9, dans lequel ledit composé organique comprend du carbone.

11. Système optique (10) selon l'une des revendications 9 et 10, dans lequel la couche de protection additionnelle (4) présente une épaisseur comprise entre 1 et 10 nanomètres, de préférence entre 2 et 5 nanomètres.

12. Système optique (10) selon l'une des revendications 9 à 11, dans lequel la couche de protection additionnelle (4) est éliminable par un traitement thermique à une température comprise entre 300 et 500°C.

13. Système optique (10) selon l'une des revendications 1 à 12, dans lequel :
- ladite électrode de travail est réalisée dans un matériau électrochrome de préférence à base d'oxyde de tungstène WOx ou d'oxyde de tungstène et de lithium LiWOx et ladite contre-électrode est réalisée de préférence en oxyde d'un alliage tungstène-nickel,
- la couche de conducteur ionique comprend de préférence une couche d'oxyde de silicium SiOx,
- lesdites première et une deuxième couches conductrices transparentes sont réalisées de préférence à base d'oxyde d'indium-étain (ITO).

14. Système optique (10) selon la revendication 13, comprenant en outre, entre ledit substrat (1) et la première couche conductrice transparente, une sous-couche comprenant de préférence une alternance d'au moins une couche à base d'oxyde de nobium et d'au moins une couche à base d'oxyde de silicium.

15. Système optique (10) selon l'une des revendications 13 et 14 comprenant en outre une surcouche agencée sur la deuxième couche conductrice transparente comprenant de préférence une couche à base d'oxyde de silicium.

16. Vitrage isolant comprenant un système optique (10) selon l'une des revendications 1 à 15, un espaceur et un autre substrat à fonction verrière assemblés entre eux.

17. Procédé de fabrication d'un vitrage isolant comprenant un système optique (10) selon l'une des revendications 1 à 15, ledit procédé comprenant les étapes suivantes :
- formation de l'empilement électrochrome (2) sur ledit substrat (1) à fonction verrière,
- agencement de la couche de protection (3) sur ledit empilement électrochrome (2),
- manipulation et/ou transformation et/ou traitement et/ou transport et/ou lavage et/ou stockage du système optique (10),
- préférentiellement, assemblage par feuilletage de la face du substrat (1) à fonction verrière opposée à celle située du côté de l'empilement électrochrome (2) avec un contre-substrat,
- assemblage dudit système optique (10), éventuellement feuilleté, avec un espaceur et un deuxième substrat à fonction verrière pour former le vitrage isolant.

18. Procédé de fabrication d'un vitrage isolant selon la revendication 17, comprenant au moins l'une des étapes suivantes :
- une étape de découpe du substrat (1) à fonction verrière,
- une étape de trempe du substrat (1) à fonction verrière après l'étape de formation de l'empilement électrochrome (2).

19. Procédé de protection d'un élément optique (10) comprenant un substrat (1) à fonction verrière et un empilement électrochrome (2) formé sur ce substrat (1), cet empilement électrochrome comportant une première couche conductrice transparente, une électrode de travail agencée au-dessus de ladite première couche conductrice transparente, une contre-électrode agencée au-dessus de ladite électrode de travail, une seconde couche conductrice transparente agencée au-dessus de ladite contre-électrode, des ions Lithium introduits au sein dudit empilement électrochrome, et, préférentiellement, une couche d'un conducteur ionique distincte intercalée entre l'électrode et la contre-électrode, le procédé comprenant une étape d'agencement d'une couche de protection (3) sur ledit empilement électrochrome (2), ladite couche de protection (3) comprenant un composé lubrifiant inorganique, **caractérisé en ce que** ladite couche de protection (3) présente une épaisseur comprise entre 1 et 30 nanomètres, de préférence entre 2 et 15 nanomètres de préférence entre 2 et 10 nanomètres, de préférence entre 2 et 5 nanomètres.

20. Procédé selon la revendication 19, selon lequel il est prévu une étape additionnelle d'agencement d'une couche de protection additionnelle (4) qui recouvre ladite couche de protection (3), la couche de protection additionnelle (4) comprenant un composé organique, et une étape ultérieure d'élimination de la couche de protection additionnelle (4) par un traitement thermique à une température comprise entre 300 et 500°C.

## Patentansprüche

1. Optisches System (10), umfassend:
- ein optisches Element (20), umfassend ein Substrat (1) mit Glasfunktion und einen elektrochromen Stapel (2), der auf diesem Substrat (1) ausgebildet ist, wobei dieser elektrochrome Stapel (2) beinhaltet: eine erste transparente leitende Schicht, eine Arbeitselektrode, die über der ersten transparenten leitenden Schicht angeordnet ist, eine Gegenelektrode, die über der Arbeitselektrode angeordnet ist, eine zweite transparente leitende Schicht, die über der Gegenelektrode angeordnet ist, Lithiumionen, die in den elektrochromen Stapel eingeführt werden, und vorzugsweise eine Schicht aus einem separaten lonenleiter, die zwischen der Elektrode und der Gegenelektrode eingefügt ist,
- eine Schutzschicht (3), die auf dem elektrochromen Stapel (2) angeordnet ist, die Schutzschicht (3) umfassend eine anorganische Schmiermittelverbindung, **dadurch gekennzeichnet, dass** die Schutzschicht (3) eine Dicke, die zwischen 1 und 30 Nanometer, vorzugsweise zwischen 2 und 15 Nanometer, vorzugsweise zwischen 2 und 10 Nanometer, vorzugsweise zwischen 2 und 5 Nanometer, liegt, aufweist.

2. Optisches System (10) nach Anspruch 1, wobei die anorganische Schmiermittelverbindung mindestens eine der folgenden Verbindungen umfasst: Titanoxid TiOx, Zinn-Zink-Oxid SnZnOx, Titan-Strontium-Oxid TiSrOx, Titan-Zirkonium-Oxynitrid TiZrOxNy, Zirkoniumoxid ZrOx.

3. Optisches System (10) nach einem der Ansprüche 1 und 2, wobei der Unterschied in der Lichtdurchlässigkeit zwischen dem optischen Element (20) und der Baugruppe, umfassend das optische Element (20) und die Schutzschicht (3), kleiner als oder gleich 5 % der Durchlässigkeit des optischen Elements (20), vorzugsweise kleiner als oder gleich 4 % der Durchlässigkeit des optischen Elements, vorzugsweise kleiner als oder gleich 3 % der Durchlässigkeit des optischen Elements, vorzugsweise kleiner als oder gleich 2 % der Durchlässigkeit des optischen Elements, vorzugsweise kleiner als oder gleich 1 % der Durchlässigkeit des optischen Elements ist.

4. Optisches System (10) nach einem der Ansprüche 1 bis 3, wobei die Schutzschicht (3) auf dem elektrochromen Stapel (2) so angeordnet ist, dass sie einem Härtungsschritt standhält, bei dem das optische System (10) auf Temperaturen von mehr als 500 °Celsius, zum Beispiel etwa 650 °Celsius, erhitzt und dann schnell abgekühlt wird.

5. Optisches System (10) nach einem der Ansprüche 1 bis 4, wobei die Baugruppe, umfassend das optische Element (10) und die Schutzschicht (3), einen Reibungskoeffizienten (µ) aufweist, der in Bezug auf den Reibungskoeffizienten (µi) des optischen Elements (20) ohne Schutzschicht (3) reduziert ist, wobei jeder Reibungskoeffizient durch eine standardisierte tribometrische Messung bestimmt wird.

6. Optisches System (10) nach einem der Ansprüche 1 bis 5, wobei die Baugruppe, umfassend das optische Element (20) und die Schutzschicht (3), einen Reibungskoeffizienten (µ) aufweist, der den Reibungskoeffizienten (µi) des optischen Elements (20) ohne Schutzschicht (3) infolge organischer Verunreinigungen verringert, wobei jeder Reibungskoeffizient durch eine standardisierte tribometrische Messung bestimmt wird.

7. Optisches System (10) nach einem der Ansprüche 1 bis 6, wobei die Baugruppe, umfassend das optische Element (20) und die Schutzschicht (3), einen Reibungskoeffizienten (µ) aufweist, der einen Wert von kleiner als 0,5, vorzugsweise kleiner als 0,4, vorzugsweise kleiner als 0,3, in einer Zeit, die zwischen 1 und 100 Stunden liegt, erreicht.

8. Optisches System (10) nach einem der Ansprüche 1 bis 7, wobei das Substrat (1) gehärtet ist.

9. Optisches System (10) nach einem der Ansprüche 1 bis 8, wobei eine zusätzliche Schutzschicht (4) vorgesehen ist, umfassend eine organische Verbindung, die die Schutzschicht (3) bedeckt.

10. Optisches System (10) nach Anspruch 9, wobei die organische Verbindung Kohlenstoff umfasst.

11. Optisches System (10) nach einem der Ansprüche 9 und 10, wobei die zusätzliche Schutzschicht (4) eine Dicke, die zwischen 1 und 10 Nanometer, vorzugsweise zwischen 2 und 5 Nanometer, liegt, aufweist.

12. Optisches System (10) nach einem der Ansprüche 9 bis 11, wobei die zusätzliche Schutzschicht (4) durch eine Wärmebehandlung bei einer Temperatur, die zwischen 300 und 500 °C liegt, entfernbar ist.

13. Optisches System (10) nach einem der Ansprüche 1 bis 12, wobei:
- die Arbeitselektrode aus einem elektrochromen Material, vorzugsweise basierend auf Wolframoxid WOx oder Wolfram-Lithium-Oxid LiWOx, gefertigt ist, und die Gegenelektrode vorzugsweise aus einem Oxid einer Wolfram-NickelLegierung gefertigt ist,
- die lonenleiterschicht vorzugsweise eine Schicht aus Siliziumoxid SiOx umfasst,
- die erste und eine zweite transparente leitende Schicht vorzugsweise basierend auf Indium-Zinn-Oxid (ITO) gefertigt sind.

14. Optisches System (10) nach Anspruch 13, ferner umfassend, zwischen dem Substrat (1) und der ersten transparenten leitenden Schicht, eine Unterschicht, umfassend vorzugsweise eine Abfolge aus mindestens einer Schicht basierend auf Nobiumoxid und mindestens einer Schicht basierend auf Siliziumoxid.

15. Optisches System (10) nach einem der Ansprüche 13 und 14, ferner umfassend eine Überschicht, die auf der zweiten transparenten leitenden Schicht angeordnet ist, umfassend vorzugsweise eine Schicht basierend auf Siliziumoxid.

16. Isolierverglasung, umfassend ein optisches System (10) nach einem der Ansprüche 1 bis 15, einen Abstandhalter und ein weiteres Substrat mit Glasfunktion, die miteinander zusammengefügt sind.

17. Verfahren zum Herstellen einer Isolierverglasung, umfassend ein optisches System (10) nach einem der Ansprüche 1 bis 15, das Verfahren umfassend die folgenden Schritte:
- Ausbilden des elektrochromen Stapels (2) auf dem Substrat (1) mit Glasfunktion,
- Anordnen der Schutzschicht (3) auf dem elektrochromen Stapel (2),
- Manipulieren und/oder Bearbeiten und/oder Behandeln und/oder Transportieren und/oder Waschen und/oder Lagern des optischen Systems (10),
- vorzugsweise Zusammenbauen durch Laminieren der Fläche des Substrats (1) mit Glasfunktion, die derjenigen gegenüberliegt, die auf der Seite des elektrochromen Stapels (2) liegt, mit einem Gegensubstrat,
- Zusammenbauen des optischen Systems (10), das optional laminiert ist, mit einem Abstandhalter und einem zweiten Substrat mit Glasfunktion, um die Isolierverglasung auszubilden.

18. Verfahren zum Herstellen einer Isolierverglasung nach Anspruch 17, umfassend mindestens einen der folgenden Schritte:
- einen Schritt zum Schneiden des Substrats (1) mit Glasfunktion,
- einen Schritt des Härtens des Substrats (1) mit Glasfunktion nach dem Schritt des Ausbildens des elektrochromen Stapels (2).

19. Verfahren zum Schützen eines optischen Elements (10), umfassend ein Substrat (1) mit Glasfunktion und einen elektrochromen Stapel (2), der auf diesem Substrat (1) ausgebildet wird, wobei dieser elektrochrome Stapel beinhaltet: eine erste transparente leitende Schicht, eine Arbeitselektrode, die über der ersten transparenten leitenden Schicht angeordnet ist, eine Gegenelektrode, die über der Arbeitselektrode angeordnet ist, eine zweite transparente leitende Schicht, die über der Gegenelektrode angeordnet ist, Lithiumionen, die innerhalb des elektrochromen Stapels eingeführt werden, und vorzugsweise eine Schicht eines separaten lonenleiters, die zwischen der Elektrode und der Gegenelektrode eingefügt ist, das Verfahren umfassend einen Schritt des Anordnens einer Schutzschicht (3) auf dem elektrochromen Stapel (2), die Schutzschicht (3) umfassend eine anorganische Schmiermittelverbindung, **dadurch gekennzeichnet, dass** die Schutzschicht (3) eine Dicke, die zwischen 1 und 30 Nanometer, vorzugsweise zwischen 2 und 15 Nanometer, vorzugsweise zwischen 2 und 10 Nanometer, vorzugsweise zwischen 2 und 5 Nanometer, liegt, aufweist.

20. Verfahren nach Anspruch 19, wobei ein zusätzlicher Schritt des Anordnens einer zusätzlichen Schutzschicht (4), die die Schutzschicht (3) bedeckt, vorgesehen ist, die zusätzliche Schutzschicht (4) umfassend eine organische Verbindung und einen nachfolgenden Schritt des Entfernens der zusätzlichen Schutzschicht (4) durch eine Wärmebehandlung bei einer Temperatur, die zwischen 300 und 500 °C liegt.

## Claims

1. An optical system (10) comprising:
- an optical element (20) comprising a glazing-function substrate (1) and an electrochromic stack (2) formed on this substrate (1), this electrochromic stack (2) including a first transparent conductive layer, a working electrode arranged above said first transparent conductive layer, a counter-electrode arranged above said working electrode, a second transparent conductive layer arranged above said counter-electrode, lithium ions introduced into said electrochromic stack, and, preferably, a separate layer of an ionic conductor, the latter layer being intermediate between the electrode and the counter-electrode,
- a protective layer (3) arranged on said electrochromic stack (2), said protective layer (3) comprising an inorganic lubricating compound, **characterized in that** said protective layer (3) has a thickness comprised between 1 and 30 nanometers, preferably between 2 and 15 nanometers, preferably between 2 and 10 nanometers, and preferably between 2 and 5 nanometers.

2. The optical system (10) as claimed in claim 1, wherein the inorganic lubricating compound comprises at least one of the following compounds: titanium oxide TiOx, tin-zinc oxide SnZnOx, titanium-strontium oxide TiSrOx, titanium-zirconium oxynitride TiZrOxNy, zirconium oxide ZrOx.

3. The optical system (10) as claimed in one of claims 1 and 2, wherein the difference in light transmittance between the optical element (20) and the assembly comprising the optical element (20) and said protective layer (3) is smaller than or equal to 5% of the transmittance of the optical element (20), preferably smaller than or equal to 4% of the transmittance of the optical element, preferably smaller than or equal to 3% of the transmittance of the optical element, preferably smaller than or equal to 2% of the transmittance of the optical element, and preferably smaller than or equal to 1% of the transmittance of the optical element.

4. The optical system (10) as claimed in one of claims 1 to 3, wherein the protective layer (3) is arranged on said electrochromic stack (2) so as to withstand all the subsequent processing steps carried out on the optical system (10).

5. The optical system (10) as claimed in one of claims 1 to 4, wherein the assembly comprising the optical element (20) and the protective layer (3) has a coefficient of friction (µ) that is low with respect to the coefficient of friction (µi) of the optical element (20) without its protective layer (3), each coefficient of friction being determined via a standardized tribometer measurement.

6. The optical system (10) as claimed in one of claims 1 to 5, wherein the assembly comprising the optical element (20) and the protective layer (3) has a coefficient of friction (µ) that decreases more rapidly than the coefficient of friction (µi) of the optical element (20) without its protective layer (3) following organic contamination, each coefficient of friction being determined via a standardized tribometer measurement.

7. The optical system (10) as claimed in one of claims 1 to 6, wherein the assembly comprising the optical element (20) and the protective layer (3) has a coefficient of friction (µ) that reaches a value lower than 0.5, preferably lower than 0.4, and preferably lower than 0.3, in a time comprised between 1 and 100 hours.

8. The optical system (10) as claimed in one of claims 1 to 7, wherein said substrate (1) is tempered.

9. The optical system (10) as claimed in one of claims 1 to 8, wherein provision is made for an additional protective layer (4) comprising an organic compound that covers said protective layer (3) .

10. The optical system (10) as claimed in claim 9, wherein said organic compound comprises carbon.

11. The optical system (10) as claimed in either of claims 9 and 10, wherein the additional protective layer (4) has a thickness comprised between 1 and 10 nanometers, and preferably between 2 and 5 nanometers.

12. The optical system (10) as claimed in one of claims 9 to 11, wherein the additional protective layer (4) is removable with a heat treatment at a temperature comprised between 300 and 500°C.

13. The optical system (10) as claimed in one of claims 1 to 12, wherein:
- said working electrode is made from an electrochromic material preferably based on tungsten oxide WOx or lithiumtungsten oxide LiWOx and said counter-electrode is preferably made of an oxide of a tungsten-nickel alloy,
- the layer of ionic conductor preferably comprises a layer of silicon oxide SiOx,
- said first and second transparent conductive layers are preferably made based on indium-tin oxide (ITO).

14. The optical system (10) as claimed in claim 13, furthermore comprising, between said substrate (1) and the first transparent conductive layer, an under-layer preferably comprising an alternation of at least one layer based on niobium oxide and of at least one layer based on silicon oxide.

15. The optical system (10) as claimed in one of claims 13 and 14, furthermore comprising an over-layer arranged on the second transparent conductive layer preferably comprising a layer based on silicon oxide.

16. An insulating glazing comprising, assembled together, an optical system (10) as claimed in one of claims 1 to 15, a spacer and another glazing-function substrate.

17. A process for manufacturing an insulating glazing comprising an optical system (10) as claimed in one of claims 1 to 15, said process comprising the following steps:
- forming the electrochromic stack (2) on said glazing-function substrate (1),
- arranging the protective layer (3) on said electrochromic stack (2),
- handling and/or converting and/or processing and/or transporting and/or washing and/or storing the optical system (10),
- preferably, assembling, via lamination of that face of the glazing-function substrate (1) which is opposite the face located on the side of the electrochromic stack (2), with a counter-substrate,
- assembling said optionally laminated optical system (10) with a spacer and a second glazing-function substrate to form the insulating glazing.

18. The process for manufacturing an insulating glazing as claimed in claim 17, comprising at least one of the following steps:
- a step of cleaving or cutting the glazing-function substrate (1),
- a step of tempering the glazing-function substrate (1) after the step of forming the electrochromic stack (2).

19. A process for protecting an optical element (10) comprising a glazing-function substrate (1) and an electrochromic stack (2) formed on this substrate (1), this electrochromic stack (2) including a first transparent conductive layer, a working electrode arranged above said first transparent conductive layer, a counter-electrode arranged above said working electrode, a second transparent conductive layer arranged above said counter-electrode, lithium ions introduced into said electrochromic stack, and, preferably, a separate layer of an ionic conductor, the latter layer being intermediate between the electrode and the counter-electrode, said process comprising a step of arranging a protective layer (3) on said electrochromic stack (2), said protective layer (3) comprising an inorganic lubricating compound, **characterized in that** said protection layer has a thickness comprised between 1 and 30 nanometers, preferably between 2 and 15 nanometers, preferably between 2 and 10 nanometers, and preferably between 2 and 5 nanometers.

20. The process as claimed in claim 19, wherein provision is made for an additional step of arranging an additional protective layer (4) that covers said protective layer (3), the additional protective layer (4) comprising an organic compound, and for a subsequent step of removing the additional protective layer (4) with a heat treatment at a temperature comprised between 300 and 500°C.
